(19) Europäisches Patentamt
European Patent Office
Office européen des brevets

(11) **EP 1 351 075 A1**

(12) **EUROPEAN PATENT APPLICATION**

(43) Date of publication:
**08.10.2003 Bulletin 2003/41**

(51) Int Cl.[7]: **G02B 6/12**, G02B 6/34

(21) Application number: **02006179.2**

(22) Date of filing: **19.03.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Fraunhofer-Gesellschaft zur Förderung der angewandten Forschung e.V.**
**80636 München (DE)**

(72) Inventors:
- **Bauer, Monika**
  **15754 Senzig (DE)**
- **Schneider, Jürgen**
  **14513 Teltow (DE)**
- **Dreyer, Christian**
  **55758 Niederwörresbach (DE)**
- **Yao, Huihai**
  **12163 Berlin (DE)**
- **Keil, Norbert**
  **14089 Berlin (DE)**
- **Zawadzki, Crispin**
  **12309 Berlin (DE)**

(74) Representative: **Olgemöller, Luitgard, Dr. et al**
**Leonhard - Olgemöller - Fricke,**
**Patentanwälte,**
**Postfach 10 09 62**
**80083 München (DE)**

(54) **Method for shifting the central wavelength of optical waveguide devices by irradiation**

(57) The present invention is directed to a method for the preparation of an optical waveguide device comprising a waveguide structure made from at least one organic polymer material on a substrate, characterized in that the waveguide structure is partially or fully exposed to irradiation sufficient to provide a change of the value of its refractive index, after the said structure has been prepared. By this method, the original central wavelength of the waveguide structure is shifted. Further, such an irradiation may be used for shifting the central wavelength of optical waveguide devices of already prepared and even used devices.

**Fig. 5**

**arrayed waveguide grating with Mask on the grating (grey area to be radiated)**

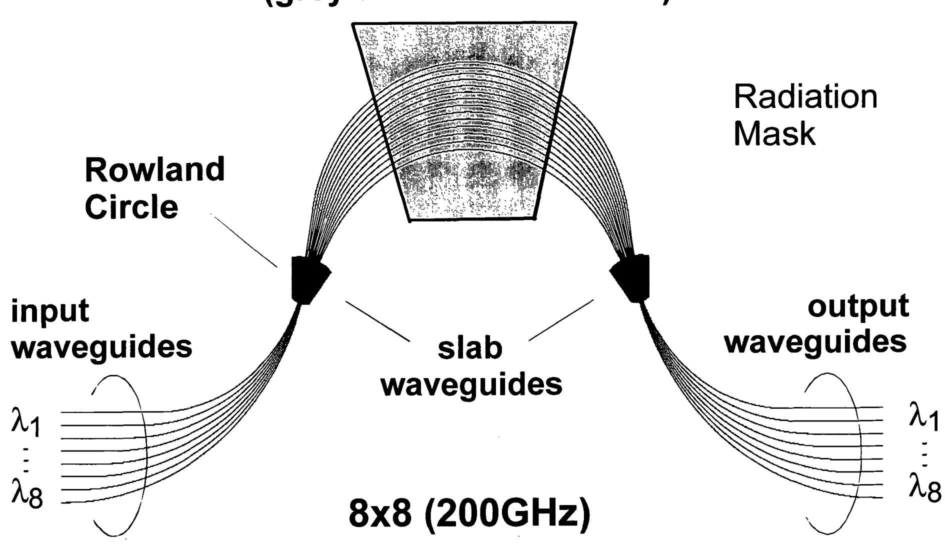


EP 1 351 075 A1

Printed by Jouve, 75001 PARIS (FR)

## Description

The present invention relates in general to optical waveguide devices, which preferably are planar, e.g. optical arrayed waveguide gratings (AWGs), multiplexers/ demultiplexers, optical add/drop multiplexers, optical switches, and the like. Particularly, the present invention relates to a method with which the central wavelength of an optical signal device may be tuned by radiation of relevant (organic) parts of the device which takes effect on the refractive index of the polymeric waveguide material. In a preferred embodiment of the invention, the device is completely or almost completely made from organic polymer materials, and is insensitive against temperature in a wide range and consists of at least one waveguide or waveguide layer on a substrate having a coefficient of thermal expansion (CTE) adapted to the waveguide material sufficient to compensate the effective thermooptic coefficient of the waveguide layers if the temperature of the device changes.

Today in the time of internet, multimedia and telecommunication, the amount of data which has to be transferred is heavily increasing. So called killer-applications like video-on-demand, internet-telephone, video-conferencing, virtual-reality need more bandwidth than it was imaginable some years ago. For long distance data transfer, glass-fiber optic cables have almost completely replaced wires made of copper and now are extending even to local areas or even to housing networks. The goal to be attained is to have an all-optical network using glass-fiber optic cables to every housing, even to every room and almost unlimited bandwidth for everyone.

Glass fibers have the enormous bandwidth of more than 40 TBps which is more than sufficient to transfer all telephone calls in the whole world through one single fiber glass cable. However, only a small part of this potential is used so far. Actually worldwide optical fiber long-haul transmission systems are upgraded to 40 Gbit/s data rates, and prototype-Systems are runned using about one TBps. One way to use an increased part of the glass fiber bandwidth is to use signals with different wavelengths. This method is the so called Dense-Wavelength-Division-Multiplexing (DWDM). Most dramatic changes in telecommunications have occurred during the last several years after optical DWDM has been invented. Multiple bandwidth without even changing the glass fiber cable results therefrom. The huge success of DWDM technique has encouraged the telecom equipment vendors to boost network capacities further and further by introducing systems with more and more channels.

DWDM-Components are integrated planar optical waveguide devices which can be regarded as integrated optical circuits combining miniaturized waveguides and optical devices on an planar substrate. The glass fibers are attached to the input and output channels of the waveguide device. The integrated optical waveguides perform one ore more functions or processes on the transmitted light (e.g. a DWDM-System combines light of different wavelength from the input-channels into one output-channel or vice-versa). Actually common integrated optical waveguide devices are realized by using silica-based planar lightwave circuits (PLCs).

Integrated optical waveguide devices (AWGs) are well known to the skilled artisan and are described in detail throughout the literature. Exemplary AWGs include a silica doped waveguide circuit core or a polymeric waveguide circuit core, on a planar substrate, such as a fused silica member, a silicon wafer or the like. Integrated optical waveguides made from polymeric waveguide materials are also well known to the skilled artisan and are described in detail throughout the literature. Further, use of polymeric substrates for optical waveguide devices is known, such substrates having the advantage of reducing the birefringence of the waveguide material and therefore the polarization shifts of the resulting device, see WO 01/02878.

Integrated AWG optical devices commonly contain a number of waveguide arms differing in their optical path length. Depending on the optical path length differences and the geometry, the light is assorted by its wavelength. Demultiplexing-devices comprise at least one input channel which transmits *N* optical signals at *N* different wavelengths ($\lambda_1$, $\lambda_2$, $\lambda_3$, ... $\lambda_N$) and at least *N* output channels each of which transmits exactly one of the *N* optical signals at an exactly determined wavelength. The more channels are used, the smaller is the range of the wavelength that can pass one particular channel. Vice versa, a wavelength division multiplexer includes at least *N* input channels and at least one output channel. Every input-channel transmits one of the *N* optical signals ($\lambda_1$, $\lambda_2$, $\lambda_3$, ... $\lambda_N$) which are combined in the output-channel. Both devices can be combined into a multiplexing- demultiplexing device that can act as a multiplexer as well as a demultiplexer.

AWG multi/demultiplexers based on organic materials used for the waveguide have been gaining increasing attention because organic polymer devices are believed to be producible at lower cost than their conventional silica based counterparts. However, not only lower production costs cause such polymers to be interesting candidates for integrated optical circuits. In addition, the refractive index can be adjusted over a broad range by selecting suitable materials and thus, a high index contrast between core and cladding can be achieved. This results in a significant reduction of the dimensions of the device. Such devices are temperature sensitive in that the channel wavelength or central wavelength of AWGs varies with temperature, and therefore, the filterfunction is negatively affected, resulting in a bad multiplexing/demultiplexing performance if the device is used in an environment where it is exposed to thermal fluctuations. The problems of thermal sensitivy of all polymeric waveguide devices is discussed in WO 00/50937. Presently, this disadvantage is tried to be overcome by using a Peltier element to keep the device at a constant temperature.

However, optical waveguide devices made in organic polymer technology have recently been developed which are insensitive against thermal variations in the environment and thus, do not require the presence of a Peltier element. Such waveguide devices are advantageous since they may be run with reduced cost because no additional control-circuit and power supply is required (see N. Keil et al., Athermal polyrization-independent all-polymer arrayed waveguide grating (AWG) multi/demultiplexer, Optical Fiber Comm. Conference and Exhibit, Anaheim/CA/US, 17-22 March 2001 and H.H. Yao et al., -Polymeric planar waveguide devices for photonic network applications, 46. SPIE Conference, San Diego/CA/US, 22-28 July 2001). It has been found that such optical waveguide devices can be prepared from materials which ca be freely chosen, as long as the coefficient of thermal expansion of the substrate matches the thermooptical coefficient (TO) of the waveguiding material in a known and defined relationship according to equation

$$\left(\frac{dn_c}{dT}\right) + n_c \cdot \alpha_{sub} \cong 0 \qquad (1)$$

Therefore, it may well be that athermal optical waveguide devices will be produced in the future in a great variability of materials, wherein at least the material used for the waveguide structure (waveguide core; possibly bottom and/or top cladding layers) will be fully or at least mainly be made of organic polymers.

The position of the central wavelength of an optical waveguide device as described above is strongly dependent on the effective refractive index of the waveguide material. In some instances, it may be desirable to change the central wavelength of such a device after its final preparation and construction. This may for example be the case in order to provide a higher yield of useful devices having the correct, desired position of their central wavelength, such devices being the product of an automated preparation and construction route. As an example, AWGs are to be tuned to the standard ITU frequency grid. Since the central wavelength of such devices very strongly depend on the material composition of the material selected for the waveguide structure material (waveguide core and, if present, cladding material(s)), already a very small change in the composition of the said materials or a very small deviation in the dimensions of the waveguide device will result in a change of the central wavelength and therefore in a faulty product which is without worth for its intended use. Therefore, a later correction of the resulting actual central wavelength might be desirable. As detailed above, such a correction should be achievable for temperature sensitive devices since the central wavelength thereof is dependent on the environmental temperature. Therefore, it can be adjusted, e.g. by using a Peltier element. However, this method is not applicable to temperature insensitive, "athermal" optical waveguide devices since the optical behaviour thereof is insensitive against temperatur changes in the environment. Therefore, "athermal" AWGs require another wavelength trimming method for adjusting to the ITU grid, which is very important in practice.

Thus, it is the problem of the present invention to provide a method by which an optical waveguide device the waveguide structure (waveguide core and possibly, if present, bottom and/or cladding layers) of which is prepared at least partly from organic polymer materials, can be tuned such that the central wavelength of the device will be shifted from a value which is not the optimum for the desired intention, to the optimum value. Further, it is the problem of the present invention to provide a method for the preparation and construction of such optical waveguide device the central wavelength of which is changed or adapted to a desired value.

This problem has been solved by a method which includes radiation of part or all of the waveguide structure (s) after this/these structures have been prepared, e.g. have been structurized upon application on a substrate or basic layer, such that a change in the central wavelength of the optical waveguide device is effected.

**Figure 1** is a schematic top-view of a preferred optical waveguiding device, on the base of an arrayed waveguide grating, with the function of a multiplexing/demultiplexing unit. The 8 input and also the 8 output-channels are printed, too.

**Figure 2** is the illustration of a spectrum of one AWG-channel, made using the waveguide acrylate polymer according to example 2.1 as cladding material and that according to example 2.2 as core material. Irradiation was made using 0, 50, 100 and 200 kGy (Kilogray). The shift of the curve is due to the increase of the effective refractive index to higher wavelengths. In particular, the shift is 0.75nm for 50kGy, 1.1nm for 100 kGy and 1.7nm for 200kGy. The additional optical loss is moderate with about 1.5 dBm for the 200kGy irradiated AWG.

**Figure 3** shows the increase of the refractive index of a monolayer of a fluorinated acrylate polymer as prepared in example 2.1. by irradiation with gamma radiation and the dependency thereof on the energy (dose) of the gamma radiation. TE means using in plane polarization, TM means out of plane polarization.

**Figure 4** shows the increase of the refractive index of a monolayer of a fluorinated acrylate polymer as prepared in example 2.2. under electron beam irradiation with increasing energy doses.

**Figure 5** is a diagram showing partial irradiation of an optical multiplexing/demultiplexing unit according to one preferred embodiment of the invention.

The optical waveguide device of the present invention can be selected from integrated optical devices, e.g. optical arrayed waveguide gratings (AWGs), multiplexers/ demultiplexers, optical add/drop multiplexers, switches and the like. Moreover, it is applicable to any other type of optical waveguide devices like optical waveguide circuits or optical filters relying on the exploitation of optical path length differences, such as directional couplers, Fabry-Perot resonators, DFB and DBR-filters, MZI (Mach-Zehnder-Interferometer) filters, ring resonators and grating assisted couplers.

Preferably, the waveguide structure of the device has a core comprising at least a first waveguide path and at least a second waveguide path wherein the said waveguide paths have a difference dL in their path length, suitable to provide an optical path difference which corresponds to suitable channel wavelengths $\lambda_n$ in the spectral region of 1500 -1600 nm important for telecommunication and to provide a desired free spectral range, depending on the number of channels and to the channel spacing.

In preferred embodiments of the invention, the integrated optical waveguide device is an arrayed waveguide grating - division multiplexer/demultiplexer with a circuit core having an array of waveguide paths. Such devices are well known to the skilled artisan. The waveguide circuit core is made from an organic polymer material and preferably comprises at least one first waveguide path and at least one second waveguide path which are adjacent to each other, as detailed above. In preferred embodiments of the invention, it comprises at least one input channel and two or more output channels or at least one output channel and two or more input channels. The present invention, however, also encompasses arrayed waveguide gratings having more than the said number of channels, and they may comprise a multiplicity of waveguide paths (up to some hundred). For example, the optical waveguide device is selected from AWGs, preferably from AWG multiplexer/demultiplexers having at least 1 input channel and 2 output channels or at least 2 input channels and 1 output channel, more preferably having a multiplicity of input channels and output channels, e.g. 16x16, 1x24, 32x32, 64x64, 128x128 and the like, and most preferbly having 8 input channels and 8 output channels (8x8).

The central wavelength of an AWG is defined by:

$$n_c \cdot \Delta L = m \cdot \lambda_0 \qquad (2)$$

where $\lambda_0$ and $n_c$ are the central wavelength and the effective refractive index of the waveguide, $\Delta L$ represents the path length difference of the arrayed waveguides, and m is the grating order. Therefore, the following equation applies:

$$\lambda_0 = n_c \cdot \Delta L / m \qquad (3),$$

The central wavelength is proportional to the effective refractive index of the waveguide, $n_c$. For AWG devices operating at 1.55µm wavelength region, $\Delta L$ /m is about $10^{-6}$ (M). If the effective refractive index would be slightly changed by $\delta n_c = 10^{-3}$, a central wavelength trimming of $\delta\lambda_0 \sim 10^{-9}$ (M) = 1nm could be expected.

Thus, the position of the central wavelength of an optical waveguide device depends on the effective refractive index of the waveguide. Therefore, a change of the central wavelength can be effected by changing the effective refractive index. While it has been found that this effect can be obtained by changing the refractive index of all materials of the waveguide structure, e.g. waveguide core, top-cladding and bottom-cladding, as far as these materials are present, it could be proved that it is sufficient and even may be advantageous to change only the refractive index of either of the materials of waveguide core, top-cladding and bottom-cladding , or to change the refractive index of two of the said structures, or even only of relevant parts of the waveguide structure.

It is well known that the refractive indices of some organic polymer materials are sensitive to the exposure of radiation such as UV light, X-rays, gamma radiation or electron beam irradiation. The change of the refractive index results from a change of the density of the network which in turn is caused for example by cracks in the polymer chains.

The method of the present invention is applicable to all optical waveguide devices which comprise a waveguide structure (waveguide core and, if present, bottom and/or top cladding) made from an organic polymer material (or a variety of such materials), provided that the said material(s) will show a change in their effective refractive index upon suitable radiation. It is preferred that the energy of irradiation is sufficient high to provide at least a shift of the half channel-spacing of the central wavelength, more preferably a shift of the full channel-spacing. This goal is usually easily attained.

Irradiation of different materials using the same kind of radiation and/or the same energy emitted from the irradiation source may for a variety of material combinations result in differences of the shift of the refractive index, but

will not necessarily have this effect. For example, irradiation of PFCB (perfluorocylobutane) polymers causes an increase of the refractive index of this material which is about twice the increase which can be observed for irradiation of a polycyan(ur)ate, if the same radiation source is used, while in contrast, irradiation of a polycyan(ur)ate and that of a fluorinated acrylate under the same conditions do not show such an effect. The different behaviour of different materials can be used in order to effect different changes of refractive index for the materials of different parts of the waveguide structure, e.g. of core and one or all claddings, if desired. For example, it is possible to use a PFCB for the waveguide and a polycyanurate for the cladding(s), or vice versa. The same effect may also be obtained by doping the material used for one of the said different parts of the waveguide structure, e.g. by incorporating a substance which is less stable against the used radiation than the main material, or is the mere portion of the material which is susceptible to cracks of bonding. Such substances are described in more detail below in regard to a desired increase of instability of the material to be irradiated.

Alternatively, the same or similar materials are used for the preparation of the waveguide core and the cladding (s), if present. In such cases, the refractive index will shift upon irradiation by the same or almost the same value.

Both variations will result in a shift of the central wavelength because the relevant value causing said shift is that of the effective refractive index of the waveguide which results from a combination of the refractive indices of both the waveguide core and the cladding, if present, in view of the geometry of the waveguide device. Of course, the difference in the increase of the refractive index should not go beyond such values by which the device will become multimodal.

The irradiation can be performed using gamma, X-ray, UV-light, electron beam or other radiation with sufficient energy to produce changes in the refractive index of the waveguiding materials. In some cases, the organic polymer intended to be used as a material for waveguide and/or cladding structures itself may be relatively stable against irradiation, and therefore, irradiation with any or a specific of the above mentioned energy sources might not result in a sufficient shift of the refractive index. To overcome such obstacles, it is suggested to modify the intended composition of the material to be used for the waveguide structure which shall be irradiated such that the desired effect is obtained. The invention provides specific suggestions to properly adapt the material if required; however, it should be kept in mind that a skilled person having knowledge of organic chemistry will be able to obviously find suitable alternatives.

In a first embodiment of the invention, irradiation is performed via UV radiation. It is known, however, that a variety of organic polymers is relatively stable against UV light, i.e. they do not contain bonds which break under the energy introduced by UV radiation. This is e.g. the case for a variety of polycyanurate ester resins. If it is desired to irradiate classes of organic polymers exhibiting this behaviour for one or the other reason, the composition of the organic polymer should therefore be modified or chosen such that UV sensitive bonds are present. For example, it is possible to incorporate a comonomer or coprepolymer containing a functional group by which it is copolymerized into the polymer network as well as a group which is susceptible to degradation by UV radiation. A variety of dyes contain suitable groups. One of such dyes is shown in example 3. Others are e.g. dyes having hydroxy or amine groups by which they can be integrated (copolymerized) into the respective polymer network, e.g. azo dyes. Examples are "Echtrot A", an acid azo dye having hydroxy and sulphonic acid groups, "Naphthylamine Bordeaux", comprising a hydroxy group, or "Ölgelb" which may be bond into the polymeric network by NH groups.

It is preferred to apply the material(s) intended as waveguide structure material(s) (waveguide core, optionally bottom and/or top cladding) as usual for the preparation of the optical waveguide device, e.g. by spin coating a resin or prepolymer to a substrate or other basic layer and subsequent structurization under curing, as required. The thus obtained polymeric structure may then be partly or fully exposed e.g. to the UV-light of a 250 W -UV-lamp for about 100 h at a temperature of 100°C. In case of a polycyanurate ester resin containing the above dye, the resulting difference in the refractive index could be found to be more than 0.010, a value which is sufficient to achieve an adequate shift of the central wavelength of the device.

Alternatively, radiation may be performed using electron beam radiation. As shown in Fig. 4, a significant increase of the refractive index depending on the dose of the electron beam and therefore on the energy applied can be achieved in thin polymer-layers of organic materials. Many organic polymers show cracks in their polymer structure upon electron beam radiation, e.g. optionally fluorinated acrylate or polyacrylate (co)polymers, polycyan(ur)ates and many others. The increase of the refractive index of such polymeric systems is in the range to obtain a sufficient high shift of the central wavelength of the device. However, in case a class of material is provided for the construction of the waveguide structure which is not sufficient sensitive to electron beam radiation, the actual selected material may be doped or modified with a irradiation sensitive comonomer or coprepolymer as described above for UV irradiated materials.

In a third embodiment, gamma radiation or X-ray radiation is used for the purpose of the invention. Again, this method is suitable for a multiplicity of organic polymers, for example optionally fluorinated (meth)acrylate polymers. As can be seen from Fig. 3, the refractive index shows a linear dependence on the radiation dose. The increase of the refractive index obtained by a dose of 100 kGy should be sufficient to shift the central wavelength of an optical waveguide device by a value in the range of about one channel-spacing (1.6 nm), as e.g. suitable for the 8x8 AWG

design used in one preferred embodiment of the invention. This can also be deviated from fig. 2 illustrating the spectrum of one AWG-channel the waveguide materials of which being made from the fluorinated acrylates of example 2, irradiated with 0, 50, 100 and 200 kGy (Kilogray). However, in case gamma or X-ray radiation are chosen for irradiation of a waveguide structure material being selected from a class which is not sufficiently sensitive to the said radiation, the actual selected material may be doped or modified with an irradiation sensitive comonomer or coprepolymer as described above for UV irradiated materials.

Because of the high penetration depth of the gamma-irradiation it is possible to achieve a good tunability even with thick buffer layers. A tuning of encapsulated devices is also possible.

In one specifically preferred embodiment of the invention, only relevant parts of the waveguide structure of the optical waveguide device need to be irradiated. One important example for this embodiment is irradiation of an AWG in the area of the grating (where a variety of waveguides having different waveguide pathlengths are guided besides each other in an arrangement having sickle form, see fig. 1) only. This embodiment is diagrammatically depicted in fig. 5. It could be shown that irradiation of only parts of the device is advantageous, due to the following reason: Multiplexing and demultiplexing of wavelengths in an AWG is performed by using channels having different optical path lengths. The difference in path length causes the light to multiplex or to demultiplex. The real, physical differences in path lengths within the grating cannot be enlarged by causing a local change in refractive index, but they are virtually increased because a waveguide the refractive index of which is increased will act as a medium having an increased optical density wherein the velocity of the light is lowered and therefore runs a virtually longer path. Consequently, if only the relevant parts of the device are irradiated, e.g. by masking or covering adjacent areas, a given irradiation dose will result in a larger shift of the central wavelength of the optical waveguide device. Another advantage of this method is the following: It is to be assumed that by any of the irradiation methods of this invention, the optical loss of the irradiated optical parts will be increased for a variety of materials. This effect is, however, partly avoided by this preferential method since only those parts of the waveguide structure which are irradiated show the said optical loss. Moreover, it is advisable to avoid irradiation of the regions adjacent to the slab (the lens, Rowland circle) These parts of the device have a very narrow range in which the refractive indices of the waveguide materials may vary, in order to provide a good focussing of the lightwaves (e.g. by the lens) and thus a good filterfunction of the device. Hence, if intolerable changes of the refractive indices of the waveguide materials in the region of the lens occur, the dimensions of the lens do not fit any longer to the refractive index of the waveguides.

Irradiation of the waveguide structure(s) (waveguide core and/or bottom/top cladding) of optical waveguide devices can be performed after these structures have been deposited onto a suitable substrate. The material of the substrate can be an inorganic material, e.g. silicon, or an organic material, e.g. a thermosetting resin having a high thermal stability. Such materials are known in the art. However, it should be kept in mind that the material should be sufficient stable against radiation. Alternatively, irradiation of the waveguide structure(s) may be performed on a different substrate or base layer, e.g. silicon, and afterwards is/are transferred to the substrate of the waveguide device.

One important advantage of the inventive method is that it is independent of time schedules or the sequence of preparation steps. Thus, it is either possible to perform the irradiation during preparation of the optical waveguide device, or to perform it later, e.g. after use of the device, for example in case the device has already been worked for several years. Gamma-radiation has the possibility to penetrate even hermetic packaging, even if the package contains metal. Thus, the service life of such an AWG might be extended by a posttuning via gamma or X-ray irradiation in order to re-adapt or to change the central wavelength as desired or required.

In one preferred embodiment, the invention is directed to an athermal optical waveguide device, more preferably to an AWG - multiplexing/demultiplexing device, and the method of its production. Specifically, the invention comprises the "tuning", i.e. the changing (increasing or decreasing) of the central wavelength of the device to adjust it onto a desired value, e.g. to the ITU-grid, by exposing the device to radiation.

The invention will now further be explained by way of examples.

### Example 1

General synthesis of fluorinated (meth)acrylate copolymers useful as materials of the waveguide core and/or waveguide cladding.

A mixture of 5 - 30 weight-% of a fluorinated aromatic monomer (e.g. pentafluorostyrene (PFS) or pentafluorophenyl methacrylate), 35 - 70 weight-% of a fluorinated aliphatic (meth)acrylate (e.g. 2,2,2-trifluoroethylmethacrylate or 2,2,2-trifluoroethylacrylate) and about 30 - 40 mol-% of glycidyl methacrylate or acrylate were dissolved in 1,4-dioxane to form a 10 weight-% solution. 1 - 3 weight-% of dibenzoyl peroxide or azodiisobutyronitrile referring to the monomer amount was added and also dissolved. The mixture was heated to 65 to 90 °C (dependent on kind of initiator) using an oil bath in a three necked round bottomed nitrogen purged flask equipped with reflux condenser, stirrer, thermometer, nitrogen in- and outlet. After about 5 hours the reaction mixture was cooled on room temperature and the polymer was precipitated by pouring the dioxane solution in an eightfold excess of water under stirring. The copolymer would be isolated by filtering from the liquor and dried at 40 °C under vacuum. For further cleaning the copolymer was redissolved as a 10 weight-% solution in ethyl acetate. The solution was pressure-filtered through a 0.2 mikron teflon membrane, reprecipitated in ethanol filtered off and dried as described above. The polymers show an average molecular mass of 20,000 - 30,000 (GPC).

**Example 2**

Synthesis of waveguide layers using specific fluorinated polyacrylates according to example 1, for irradiation with electron beam, gamma or X-ray irradiation.

**2.1.** Example 1 is performed using as starting materials:
59.2 % trifluoroethylmethacrylate (TFM), 35.8 % (glycidylmethacrylate) GMA and 5 % pentafluorostyrene (PFS), all percentages referring to the mass of the composition.
**2.2.** Example 1 is performed using as starting materials:
35.4 % TFM, 34.6 % GMA and 30 % PFS, all percentages referring to the mass of the composition.

The compositions of 2.1. or 2.2. are dissolved in an adequate solvent, preferably 2-ethylethoxyacetate, for proper application. These solutions contain also 0.5 - 2.0 weight-% of a cationic photoinitiator (triarylsulphonium phosphate or antimonate) referred to the copolymer weight. A polyacrylate buffer or cladding layer is prepared by spin-coating one of the said solutions onto a base layer or substrate and drying. The dried layer is heated on a heating plate up to 120 °C and irradiated at the same time with an 250 W UV-lamp for 15 - 30 min. The thickness of the layer is typically 15 - 20 µm for a layer to be used as a buffer layer, and 6 - 8°µm for a layer intended to be used as a waveguiding layer. In order to perform a structurization of the guiding layer, this can be performed via reactive ion etching (RIE).
Irradiation of a thin layer made from the composition of example 2.1 using gamma-irradiation results in refractive index shifts as may be seen in Fig. 3.
Irradiation of a thin layer made from the composition of example 2.2 using electron beam irradiation results in refractive index shifts as may be seen in Fig. 4 (n TE is the refractive index for in plane polarization, n TM is the refractive index for out of plane polarization).
A 8x8-channel AWG-Multiplexing/Demultiplexing (DWDM) optical signal device prepared from a fluorinated acrylat composition (top and bottom cladding made from a material according to example 2.1., waveguide made from a material according to example 2.2) was irradiated with a dose of about 200 kGy (kilogray) of gamma-irradiation. Surprisingly it could be found that the central wavelength of the device was shifted more than one channel spacing (1.7 nm). Thus, it was shown that a AWG-device can be tuned by gamma-irradiation adequately in a wide range. So its central wavelength can be shifted after the production of the device to fit to the ITU-Grid. Besides irraciation with 200 kGy, irradiation was made using 50 kGy and 100 kGy. The results may be derived from fig. 2.

**Example 3**

Preparation of a polycyanurate ester waveguiding layer,

The co-reaction of cyanate esters with monocyanates is not only able to modify the branching density of the resulting network drastically, but also its chemical composition. Therefore, cyanate esters, alone or in combination with monocyanates, are suitable monomers for the production of waveguide structures.
Used Monomers:

1)Arocy ® F10 (94 mol %)

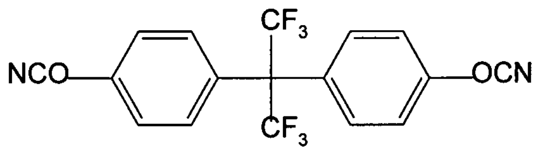

2) A dye (6 mol-%) having formula:

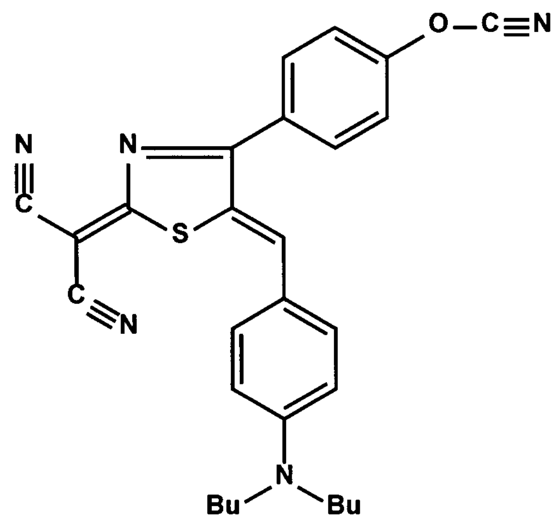

5g of the mixture AroCy® F10 (Lonza AG), and the dye are heated to 180°C in a round bottomed flask for about 6 hours. The reaction was stopped by bringing the flask into liquid nitrogen. The prepolymer is obtained as a crude intensive blue granulate. The prepolymer was dissolved in 2-ethylethoxyacetate. The solution was spin-coated onto a silicone base layer. The thus obtained polymeric layer was then dried and cured under nitrogen for 30 min. at 250°C. Subsequently, it was fully exposed to the UV-light of a 250 W -UV-lamp for about 100 h at a temperature of 100°C. The resulting difference in the refractive index could be found to be more than 0.010, a value which is sufficient to achieve an adequate shift of the central wavelength of the device.

## Claims

1. Method for the preparation of an optical waveguide device comprising a waveguide structure made from at least one organic polymer material on a substrate, **characterized in that** the waveguide structure is partially or fully exposed to irradiation sufficient to provide a change of the value of its refractive index, after the said structure has been prepared.

2. Method according to claim 1, wherein the irradiation is performed using UV radiation, electron beam radiation, or, preferably, gamma or X-ray radiation.

3. Method according to claim 1 or 2, wherein the polymeric material of the waveguide structure is made using a copolymerizable comonomer or coprepolymer, preferably a dye, which contains a chemical bond which is susceptible to break upon said irradiation.

4. Method according to claim 3 wherein the polymeric material is a polycyanate containing a dye which has been copolymerized via a cyanate group.

5. Method according to any of the preceding claims, wherein the optical waveguide device is selected from integrated optical devices, preferably from optical arrayed waveguide gratings (AWGs), multiplexers/ demultiplexers, optical add/drop multiplexers, or from optical waveguide curcuits or optical waveguide filters relying on the exploitation of optical path length differences, preferably from directional couplers, Fabry-Perot resonators, DFB and DBR-filters, MZI (Mach-Zehnder-Interferometer) filters, ring resonators and grating assisted couplers, or wherein it is selected from integrated optical devices the function of which does not rely on the exploitation of optical path length differences, preferably selected from switches.

6. Method according to any of the preceding claims wherein the optical waveguide device is an AWG which is fully irradiated.

7. Method according to any of the preceding claims wherein only part of the waveguide structure is irradiated.

8. Method according to claim 7, wherein the optical waveguide device is an AWG comprising a grating area consisting of a variety of adjacent bent channels, wherein the irradiation is restricted to the grating.

9. Method according to any of the preceding claims wherein the waveguide structure exposed to irradiation comprises at least two different materials the refractive indices of which will shift by different amounts upon irradiation using the same radiation source.

10. Method for changing the central wavelength value of an optical waveguide device comprising a waveguide structure made from at least one organic polymer material on a substrate, **characterized in that** the waveguide structure of the said device is partially or fully exposed to irradiation sufficient to provide a change of the value of its refractive index.

11. Method according to claim 10, wherein the irradiation is performed using UV radiation, electron beam radiation, or, preferably, gamma or X-ray radiation.

12. Method according to claim 10 or 11, wherein the polymeric material of the waveguide structure comprises a copolymerized comonomer or coprepolymer, preferably a dye, which contains a chemical bond which is susceptible to break upon said irradiation.

13. Method according to claim 12 wherein the polymeric material is a polycyanate containing a dye which has been copolymerized via a cyanate group.

14. Method according to any of claims 10 to 13, wherein the optical waveguide device is selected from integrated optical devices, preferably from optical arrayed waveguide gratings (AWGs), multiplexers/ demultiplexers, optical add/drop multiplexers, or from optical waveguide curcuits or optical waveguide filters relying on the exploitation of optical path length differences, preferably from directional couplers, Fabry-Perot resonators, DFB and DBR-filters, MZI (Mach-Zehnder-Interferometer) filters, ring resonators and grating assisted couplers, or wherein it is selected from integrated optical devices the function of which does not rely on the exploitation of optical path length differences, preferably selected from switches.

15. Method according to any of claims 10 to 14, wherein the optical waveguide device is an AWG which is fully irradiated.

16. Method according to any of claims 10 to 15, wherein only part of the waveguide structure is irradiated.

17. Method according to claim 16, wherein the optical waveguide device is an AWG comprising a grating area consisting of a variety of adjacent bent channels, wherein the irradiation is restricted to the grating.

18. Method according to any of claims 10 to 17, wherein the waveguide structure exposed to irradiation comprises at least two different materials the refractive indices of which will shift by different amounts upon irradiation using the same radiation source.

Fig. 1

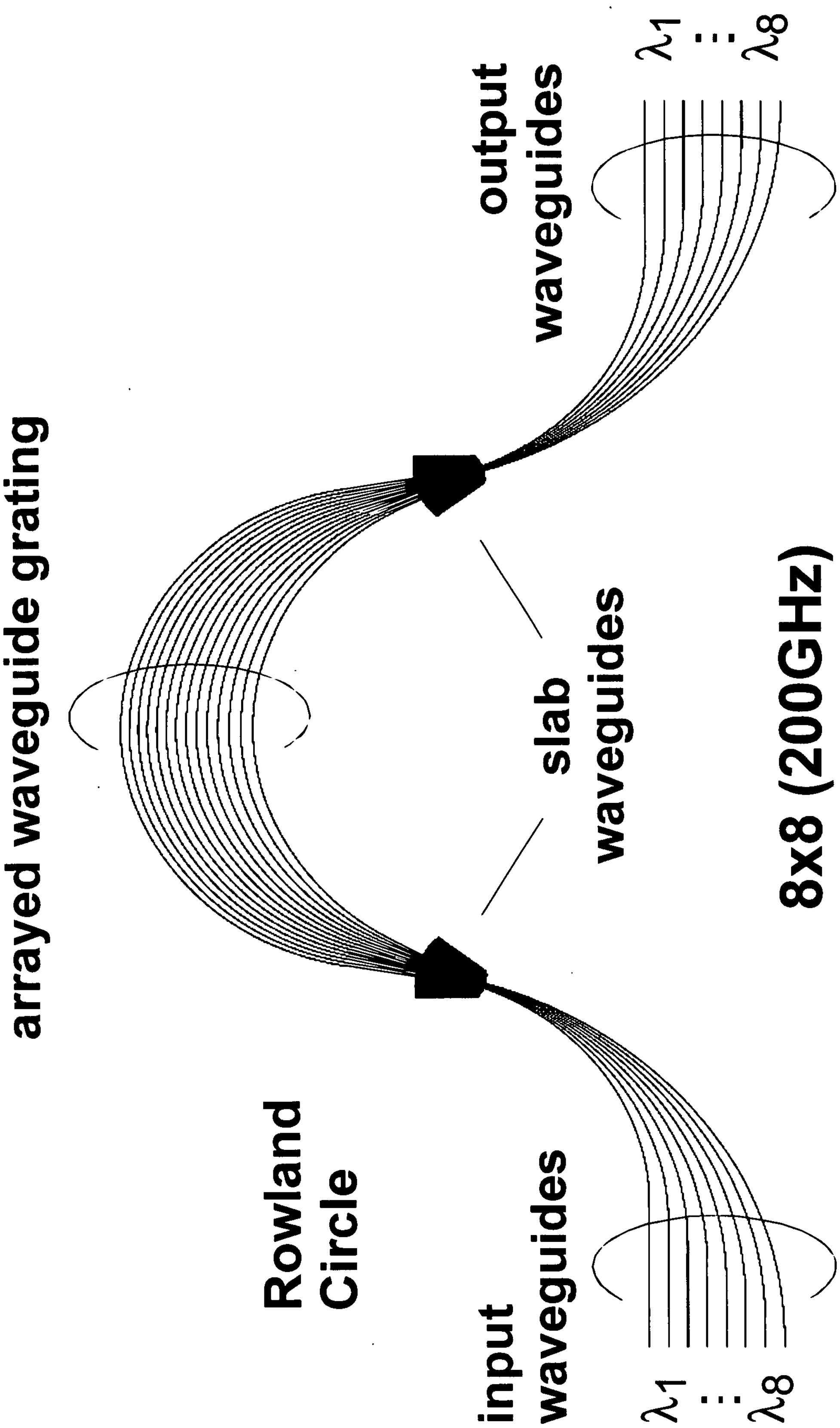
arrayed waveguide grating
Rowland Circle
input waveguides
λ1 ... λ8
slab waveguides
output waveguides
λ1 ... λ8
8x8 (200GHz)

Fig. 2

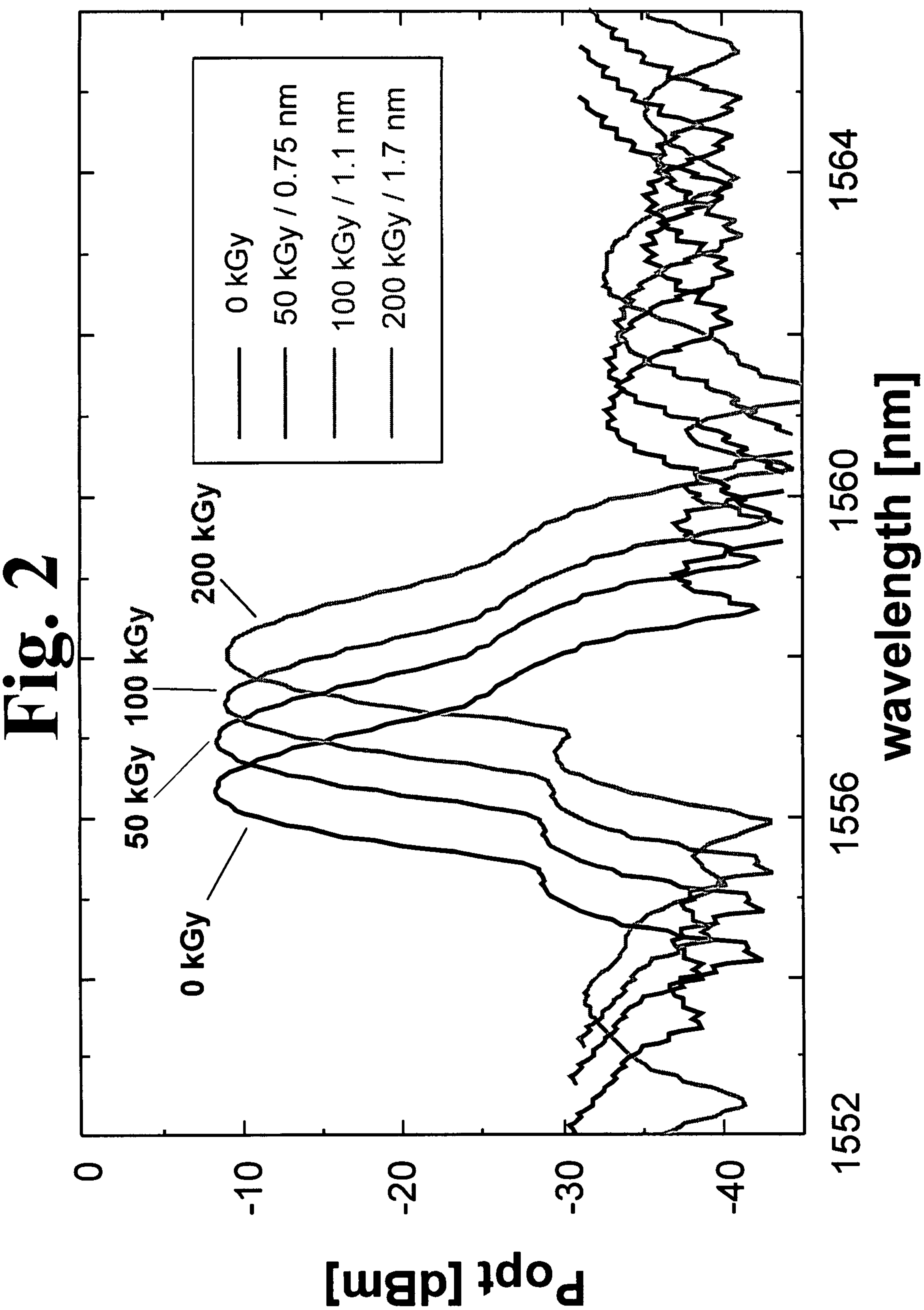
0 kGy
50 kGy / 0.75 nm
100 kGy / 1.1 nm
200 kGy / 1.7 nm
0 kGy
50 kGy
100 kGy
200 kGy
0
-10
-20
-30
-40
Popt [dBm]
1552
1556
1560
1564
wavelength [nm]

# Fig. 3

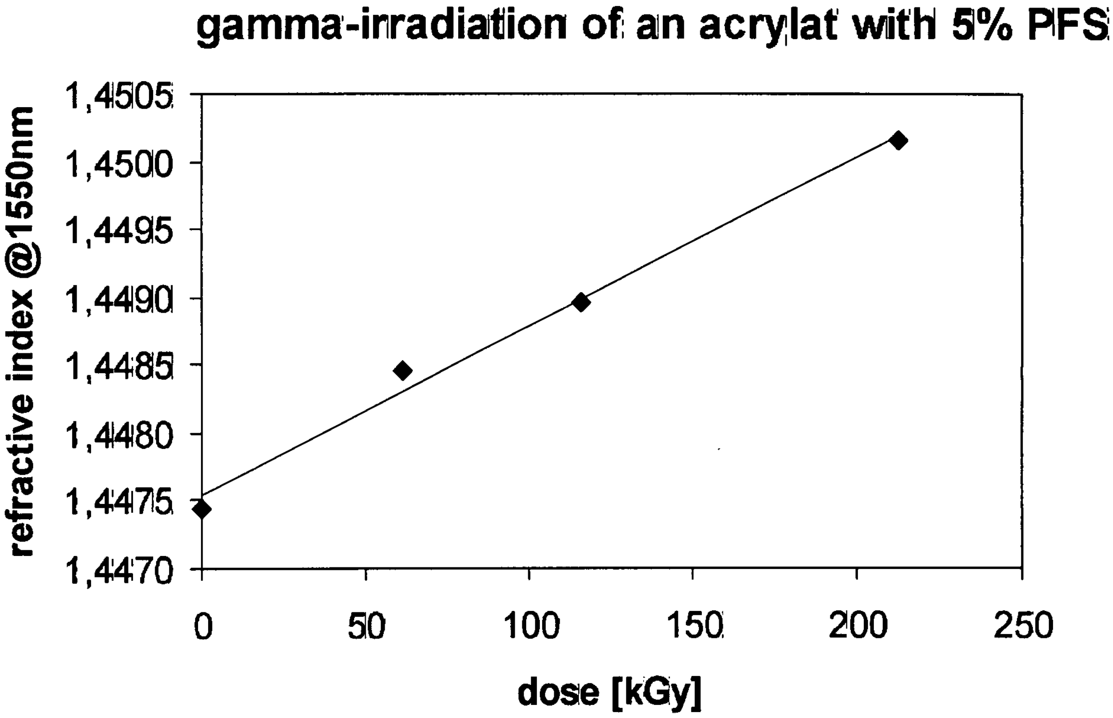
gamma-irradiation of an acrylat with 5% PFS
refractive index @1550nm
1,4505
1,4500
1,4495
1,4490
1,4485
1,4480
1,4475
1,4470
0
50
100
150
200
250
dose [kGy]

# Fig. 4

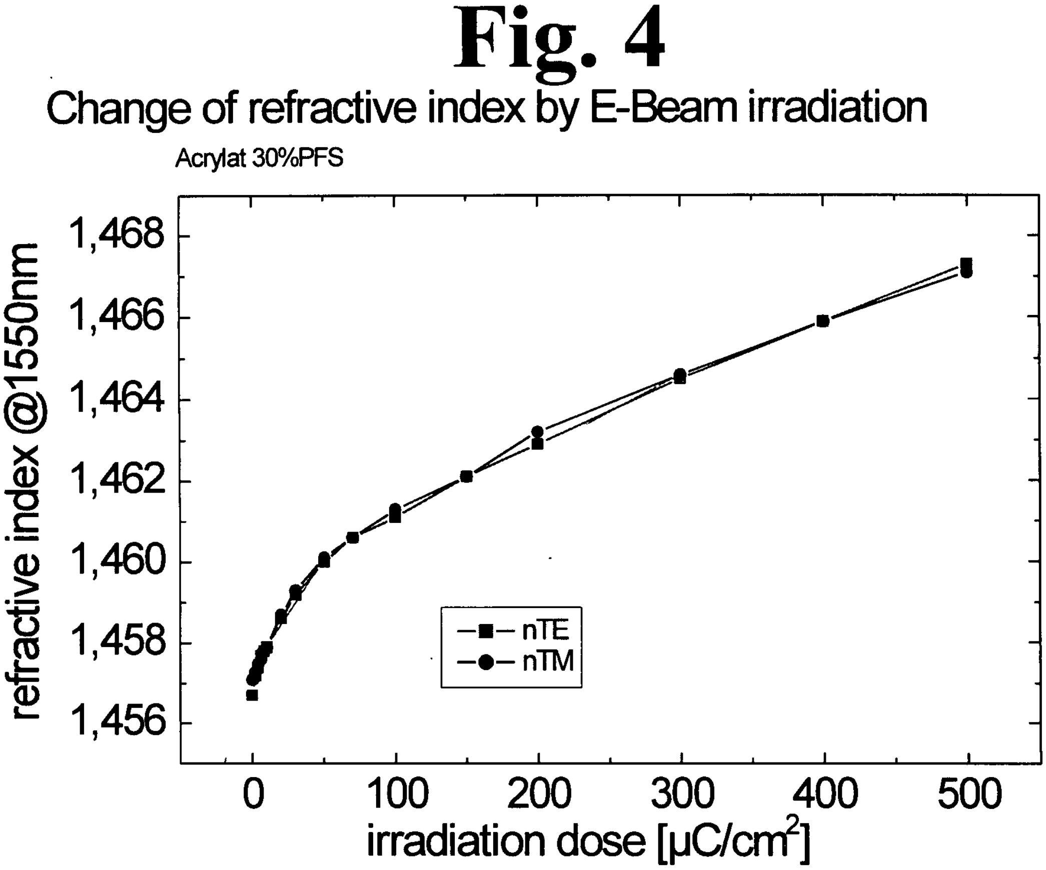
Change of refractive index by E-Beam irradiation
Acrylat 30%PFS
refractive index @1550nm
1,468
1,466
1,464
1,462
1,460
1,458
1,456
nTE
nTM
0
100
200
300
400
500
irradiation dose [µC/cm²]

# Fig. 5

**arrayed waveguide grating with Mask on the grating (grey area to be radiated)**

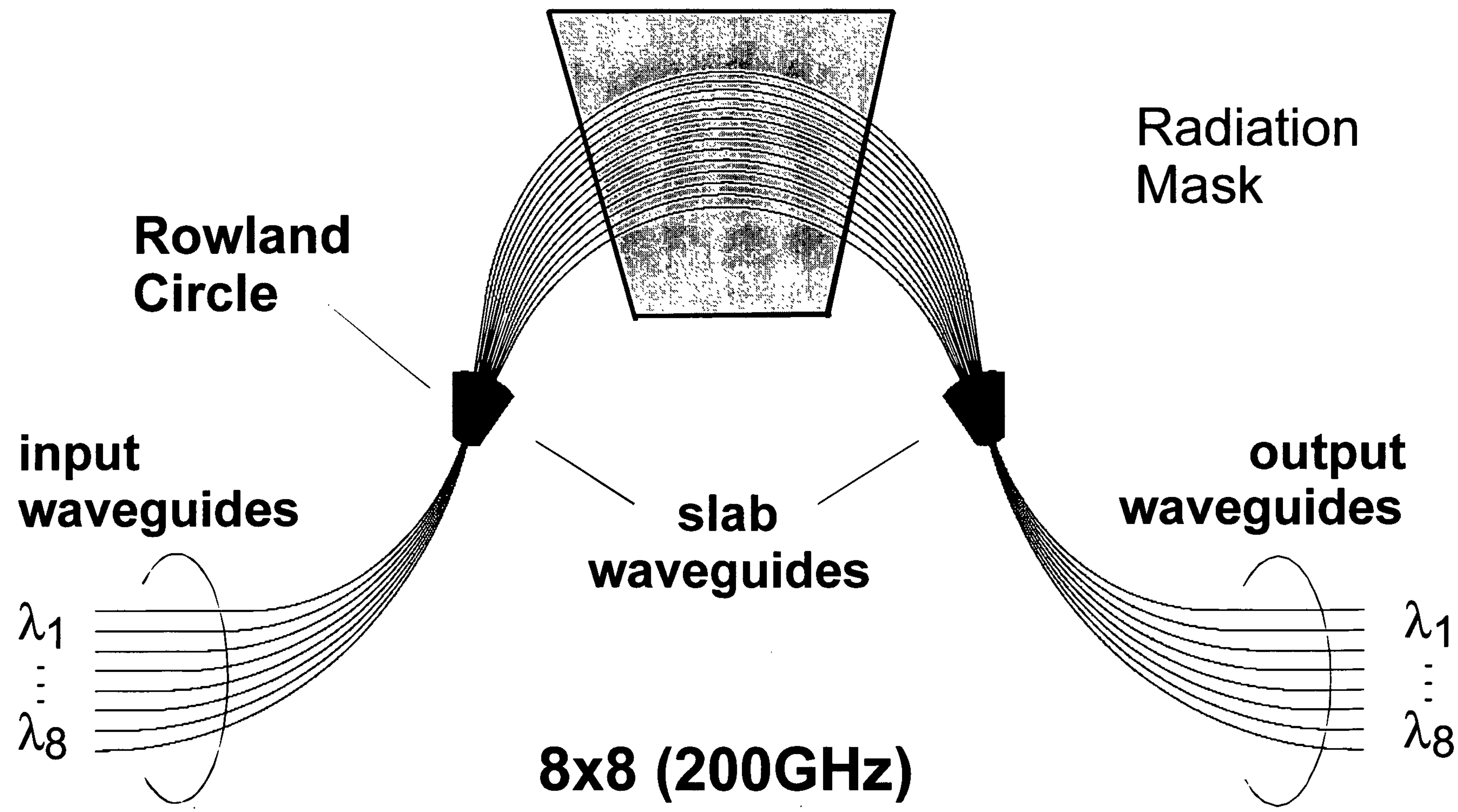

European Patent Office

# EUROPEAN SEARCH REPORT

Application Number
EP 02 00 6179

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | AHN S-W ET AL: "Post-fabrication tuning of a polymeric grating-assisted codirectional coupler filter by photobleaching" OPTICS COMMUNICATIONS, NORTH-HOLLAND PUBLISHING CO. AMSTERDAM, NL, vol. 194, no. 4-6, 15 July 2001 (2001-07-15), pages 309-312, XP004306769 ISSN: 0030-4018 | 1-3,5, 10-12,14 | G02B6/12 G02B6/34 |
| Y | * page 309 - page 310 * | 6-8, 15-18 | |
| | --- | | |
| Y | EP 1 118 886 A (CORNING INC) 25 July 2001 (2001-07-25) * page 3, line 6 - line 35 * | 6-8, 15-18 | |
| | --- | | |
| X | ARAKAMI S ET AL: "FINE TUNING OF WAVEVECTOR CONSERVATION IN GUIDED WAVE DEVICES BY PHOTOBLEACHING" ELECTRONICS LETTERS, IEE STEVENAGE, GB, vol. 26, no. 16, 2 August 1990 (1990-08-02), pages 1300-1301, XP000108221 ISSN: 0013-5194 * abstract * | 1,10 | TECHNICAL FIELDS SEARCHED (Int.Cl.7) G02B |
| | --- | | |
| X | CHEN A ET AL: "TRIMMING OF POLYMER WAVEGUIDE Y-JUNCTION BY RAPID PHOTOBLEACHING FOR TUNING THE POWER SPLITTING RATIO" IEEE PHOTONICS TECHNOLOGY LETTERS, IEEE INC. NEW YORK, US, vol. 9, no. 11, 1 November 1997 (1997-11-01), pages 1499-1501, XP000722983 ISSN: 1041-1135 * page 1499; figure 1 * | 1,6,10, 16 | |
| | --- | | |
| | -/-- | | |

The present search report has been drawn up for all claims

| Place of search | Date of completion of the search | Examiner |
|---|---|---|
| BERLIN | 19 August 2002 | von Moers, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 02 00 6179

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 306 563 B1 (XU BAOPEI ET AL)<br>23 October 2001 (2001-10-23)<br>* column 5, line 10-18 *<br>----- | 4,13 | |
| | | | TECHNICAL FIELDS SEARCHED (Int.Cl.7) |

The present search report has been drawn up for all claims

| Place of search | Date of completion of the search | Examiner |
|---|---|---|
| BERLIN | 19 August 2002 | von Moers, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 00 6179

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2002

| Patent document cited in search report | | Publication date | Patent family member(s) | | Publication date |
|---|---|---|---|---|---|
| EP 1118886 | A | 25-07-2001 | EP | 1118886 A1 | 25-07-2001 |
| | | | AU | 1917901 A | 24-07-2001 |
| | | | WO | 0151969 A1 | 19-07-2001 |
| US 6306563 | B1 | 23-10-2001 | AU | 5627900 A | 09-01-2001 |
| | | | BR | 0011774 A | 26-03-2002 |
| | | | CN | 1357010 T | 03-07-2002 |
| | | | EP | 1203031 A1 | 08-05-2002 |
| | | | WO | 0078819 A1 | 28-12-2000 |
| | | | US | 2002006586 A1 | 17-01-2002 |

EPO FORM P0459

For more details about this annex : see Official Journal of the European Patent Office, No. 12/82